# EUROPEAN PATENT SPECIFICATION

(11) **EP 0 363 840 B1**
(45) Date of publication and mention of the grant of the patent: **20.09.1995**
(21) Application number: 89118583.7
(22) Date of filing: 06.10.1989
(51) Int. Cl.: G06F 12/08

(54) **Cache unit capable of efficiently insuring cache coherence**
Zum wirksamen Versichern von Cache-Speicherübereinstimmung geeignete Cache-Speichereinheit
Unité d'antémémoire capable d'assurer efficacement la cohérence d'antémémoire

(30) Priority: 08.10.1988 JP 252906/88
(43) Date of publication of application: 18.04.1990
(73) Proprietor: NEC CORPORATION, Tokyo (JP)
(72) Inventor: Nishida, Masato c/o NEC Corporation, Minato-ku Tokyo (JP); Hinata, Norio c/o NEC Koufu, Ltd., Yamanashi (JP)
(74) Representative: VOSSIUS & PARTNER

(56) References cited:
- EP-A- 0 232 526
- WO-A-82/03480

## Description

### CACHE UNIT CAPABLE OF EFFICIENTLY INSURING CACHE COHERENCE

This invention relates to a multiprocessor system including a plurality of cache units which are connected in common to a main storage and to instruction processing units, respectively.

A multiprocessor system comprises a plurality of instruction processing units, a main storage, and a plurality of cache units which are connected in common to the main storage and to the respective instruction processing units. The main storage is divided into a common memory area accessed by the instruction processing units in common and a plurality of exclusive memory areas exclusively accessed by the respective instruction processing units. Each cache unit includes a cache memory divided into a plurality of block areas for memorizing, as memorized blocks, memory blocks fetched from the main storage.

In the multiprocessor system of the type described, the memory blocks of the main storage and the memorized blocks of each cache memory must always coincide with one another. In other words, cache coherence must be insured.

To this end, various cache coherence methods are already known. A first one of the cache coherence methods is disclosed in United States Patent No. 4,775,955 issued to Lishing Liu and assigned to International Business Machines Corporation (IBM). The first method comprises the steps of supplying a memory area signal indicative of a memory area of a memory block updated by an instruction processing unit with other instruction processing units and flushing entries corresponding to the updated memory block stored in the memory area indicated by the memory area signal from the cache memories of the cache units connected to the other instruction processing units. Therefore, the first method is called a flushing method. In the flushing method, each instruction processing unit must be equipped with a supervising device for supervising access for the cache memories of the other instruction processing units. At any rate, it is necessary for each instruction processing unit to comprise the supervising device having complicated structure.

In a second one of the cache coherence methods, write-in and/or read out of the main storage are carried out with the cache units bypassed when the common memory area of the main storage is accessed by write-in requests and/or read requests which are supplied from the instruction processing units. Therefore, the second method is called a bypass method. The bypass method is disadvantageous in that a memory access operation undesirably wastes a long access time whenever a memory access is made for the common memory area. That is, the bypass method results in degradation of performance of the multiprocessor system.

In a third one of the cache coherence methods, each cache memory is cleared in response to a cache clear request supplied from the corresponding instruction processing unit so as to erase all of entries out of the cache memory whenever a store operation is carried out for the main storage. Therefore, the third method is called an all-clearing method. The all-clearing method is disadvantageous in that each cache unit does not completely play its own role or function.

At any rate, each of the second and the third methods is incapable of efficiently insuring the cache coherence.

It is an object of this invention to provide a cache unit which is capable of efficiently insuring cache coherence.

It is another object of this invention to provide a cache unit of the type described, which is capable of flushing an entry corresponding to an updated block of a common memory area out of a cache memory with a simple structure.

It is still another object of this invention to provide a cache unit of the type described, which is capable of carrying out a memory access operation with a short access time even when a memory access is made for the common memory area.

It is yet another object of this invention to provide a cache unit of the type described, which is capable of completely playing its own role.

A multiprocessor system to which this invention is applicable is claimed in Claim 1.

The invention will be described in detail in connection with the drawings in which
Fig. 1 shows a block diagram of a multiprocessor system to which this invention is applicable;
Fig. 2 shows a view for use in describing a main storage included in the multiprocessor system illustrated in Fig. 1; and
Fig. 3 shows a block diagram of a cache unit according to a preferred embodiment of this invention.

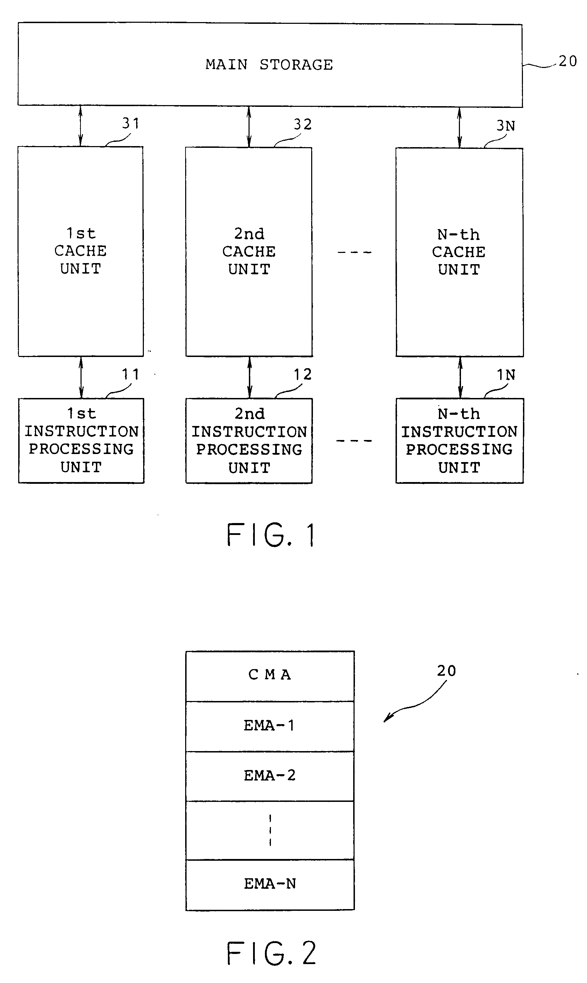

Referring to Fig. 1, description will begin with a multiprocessor system to which this invention is applicable. The multiprocessor system comprises first through N-th instruction processing units 11, 12, ..., and 1N, a main storage 20, and first through N-th cache units 31, 32, ..., and 3N where N represents a first predetermined natural number which is not less than two. The first through N-th cache units 31 to 3N are connected in common to the main storage 20 and connected to the first through the N-th instruction processing units 11 to 1N, respectively.

Temporarily referring to Fig. 2, the main storage 20 is divided into a common memory area CMA and first through N-th exclusive memory areas EMA-1, EMA-2, ..., and EMA-N. The common memory area CMA is accessed by the first through the N-th instruction processing units 11 to 1N in common. The first through N-th exclusive memory areas EMA-1 to EMA-N are exclusively accessed by the first through the N-th instruction processing units 11 to 1N, respectively.

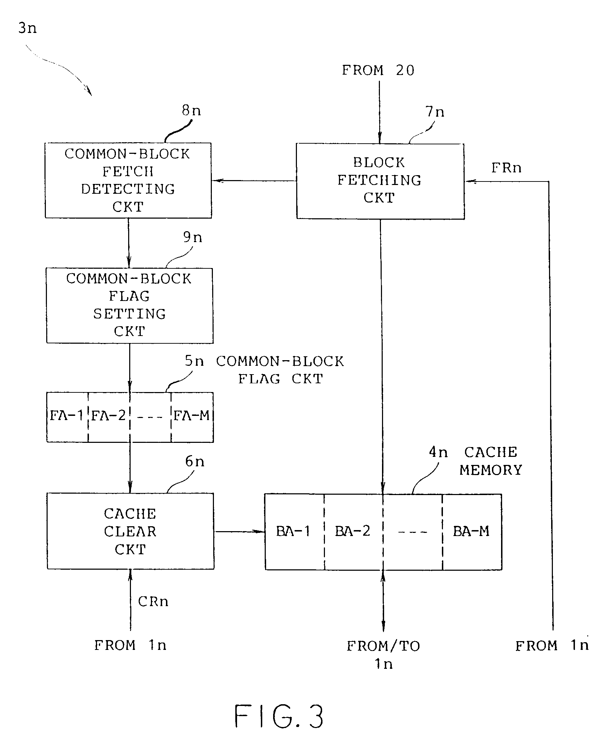

Turning to Fig. 3, an n-th cache unit 3n includes an n-th cache memory 4n, where n is variable between 1 and N, both inclusive. The n-th cache memory 4n is divided into first through M-th block areas BA-1, BA-2, ..., and BA-M where M represents a second predetermined natural number which is not less than two. The first through the M-th block areas BA-1 to BA-M are for memorizing memory blocks fetched from the main storage 20 as first through M-th memorized blocks, respectively. The n-th cache unit 3n is supplied from an n-th instruction processing unit 1n with an n-th succession of requests. The requests of the n-th succession include an n-th cache clear request CRn indicative of clear of the n-th cache memory 4n and an n-th fetch request FRn indicative of fetch of a particular one of the memory blocks.

The n-th cache unit 3n comprises an n-th common-block flag circuit 5n. The n-th common-block flag circuit 5n is divided into first through M-th flag bit areas FA-1, FA-2, ..., and FA-M. The first through the M-th flag bit areas FA-1 to FA-M correspond to first through the M-th block areas BA-1 to BA-M, respectively. An m-th flag bit area FA-m memorizes an m-th flag bit corresponding to an m-th memorized block, where m is variable between 1 and M, both inclusive. The m-th flag bit indicates presence or absence of a specific one of the memory blocks in the common memory area CMA (Fig. 2) in correspondence to the m-th memorized block.

The n-th cache clear request CRn is supplied to an n-th cache clear circuit 6n which is connected to the common-block flag circuit 5n and to the n-th cache memory 4n. Responsive to the n-th cache clear request CRn, the n-th cache clear circuit 6n clears the n-th cache memory 4n so as to erase the m-th memorized block when the m-th flag bit indicates presence of the specific memory block in the common memory area CMA.

The n-th fetch request FRn is supplied to an n-th block fetching circuit 7n which is connected to the main storage 20 (Fig. 1) and to the n-th cache memory 4n. Responsive to the n-th fetch request FRn, the n-th block fetching circuit 7n fetches, as a fetched block, the particular memory block from the main storage 20 when the particular memory block is absent in the n-th cache memory 4n for the n-th fetch request FRn. The n-th block fetching circuit 7n stores the fetched block in the m-th block area BA-m as the m-th memorized block. The particular memory block may or may not be one of memory blocks that is present in the common memory area CMA.

The n-th block fetching circuit 7n is connected to an n-th common-block fetch detecting circuit 8n. The n-th common-block fetch detecting circuit 8n detects whether the particular memory block is present or absent in the common memory area CMA. The n-th common-block fetch detecting circuit 8n produces a detection signal when the particular memory block is present in the common memory area CMA.

The n-th common-block fetch detecting circuit 8n carries out a detection operation by making a page table word include a bit which indicates whether the particular memory block is present or absent in the common memory area CMA when the multiprocessor system carries out a memory control operation by paging. Alternatively, the n-th common-block fetch detecting circuit 8n may carry out another detection operation by making the n-th fetch request FRn include a bit which indicates whether the particular memory block is present or absent in the common memory area CMA.

The detection signal is delivered to an n-th common-block flag setting circuit 9n which is connected to the n-th common-block flag circuit 5n. Responsive to the detection signal, the n-th common-block flag setting circuit 9n sets the m-th flag bit indicative of presence of the particular memory block in the m-th flag bit area FA-m.

## Claims

1. A multiprocessor system comprising first through N-th instruction processing units (11 to 1N) where N represents a first predetermined natural number which is not less than two, a main storage (20) which is divided into a common memory area (CMA) accessed by said first through said N-th instruction processing units (11 to 1N) in common and first through N-th exclusive memory areas (EMA-1 to EMA-N) exclusively accessed by said first through said N-th instruction processing units (11 to 1N),
respectively, and first through N-th cache units (31 to 3N) connected in common to said main storage (20) and connected to said first through said N-th instruction processing units (11 to 1N), respectively, an n-th cache unit (3n) including an n-th cache memory (4n), where n is variable between 1 and N, both inclusive, said n-th cache memory (4n) being divided into first through M-th block areas (BA-1 to BA-M) for memorizing memory blocks fetched from said main storage (20) as first through M-th memorized blocks, respectively, where M represents a second predetermined natural number which is not less than two, an n-th instruction processing unit (1n) supplying said n-th cache unit (3n) with an n-th cache clear request indicative of clear of said n-th cache memory (4n), said n-th instruction processing unit (1n) supplying said n-th cache unit (3n) with an n-th fetch request indicative of fetch of a particular one of the memory blocks, said n-th cache unit (3n) comprising a block fetching circuit (7n) connected to said main storage (20) and to said n-th cache memory (4n) for fetching, as a fetched block, said particular one of the memory blocks from said main storage (20) in response to said n-th fetch request when said particular one of the memory blocks is absent in said n-th cache memory for said n-th fetch request, said block fetching circuit (7n) storing said fetched block into an m-th block area (BA-m) as an m-th memorized block, where m is variable between 1 and M, both inclusive,
characterized in that said n-th cache unit (3n) comprises:
common-block flag means (5n) divided into first through M-th flag bit areas (FA-1 to FA-M) corresponding to said first through said M-th block areas (BA-1 to BA-M), respectively, an m-th flag bit area (FA-m) memorizing an m-th flag bit corresponding to said m-th memorized block to indicate presence or absence of one of said memory blocks in said common memory area (CMA) in correspondence to said m-th memorized block;
cache clear means (6n) connected to said common-block flag means (5n) and to said n-th cache memory (4n) and responsive to said n-th cache clear request for clearing said n-th cache memory (4n) so as to erase said m-th memorized block when said m-th flag bit indicates presence of said one of the memory blocks in said common memory area (CMA);
common-block fetch detecting means (8n) connected to said block fetching circuit (7n) for detecting whether said particular one of the memory blocks is present or absent in said common memory area (CMA), said common-block fetch detecting means (8n) producing a detection signal when said particular one of the memory blocks is present in said common memory areas (CMA); and
common-block flag setting means (9n) connected to said common-block fetch detecting means (8n) and to said common-block flag means (5n) for setting said m-th flag bit indicative of presence of said particular one of the memory blocks in said m-th flag bit area (FA-m) in response to said detection signal.

## Patentansprüche

1. Multiprozessorsystem, das aufweist: erste bis Nte Befehlsverarbeitungseinheiten (11 bis 1N), wobei N eine erste bestimmte natürliche Zahl, die nicht kleiner als zwei ist, darstellt, einen Hauptspeicher (20), der in einen gemeinsamen Speicherbereich (CMA), auf den durch die ersten bis Nten Befehlsverarbeitungseinheiten (11 bis 1N) gemeinsam zugegriffen wird, und erste bis Nte exklusive Speicherbereiche (EMA-1 bis EMA-N), auf die jeweils ausschließlich durch die ersten bis Nten Befehlsverarbeitungseinheiten (11 bis 1N) zugegriffen wird, aufgeteilt ist, und erste bis Nte Cache-Speichereinheiten (31 bis 3N), die gemeinsam mit dem Hauptspeicher (20) verbunden sind und jeweils mit den ersten bis Nten Befehlsverarbeitungseinheiten (11 bis 1N) verbunden sind, eine nte Cache-Speichereinheit (3n) einschließlich einem nten Cache-Speicher (4n), wobei n zwischen 1 und N - beide eingeschlossen - variabel ist und der nte Cache-Speicher (4n) in erste bis Mte Blockbereiche (BA-1 bis BA-M) aufgeteilt ist, um aus dem Hauptspeicher (20) abgerufene Speicherblöcke jeweils als erste bis Mte gespeicherte Blöcke zu speichern, wobei M eine zweite bestimmte natürliche Zahl, die nicht kleiner als zwei ist, darstellt, eine nte Befehlsverarbeitungseinheit (1n), welche die nte Cache-Speichereinheit (3n) mit einer nten Cache-Freiräumaufforderung beliefert, welche anzeigt, daß der nte Cache-Speicher (4n) frei ist, wobei die nte Befehlsverarbeitungseinheit (1n) die nte Cache-Speichereinheit (3n) mit einer nten Abrufaufforderung beliefert, die den Abruf eines bestimmten der Speicherblöcke anzeigt und wobei die nte Cache-Speichereinheit (3n) eine Blockabrufschaltung (7n) aufweist, die mit dem Hauptspeicher (20) und dem nten Cache-Speicher (4n) verbunden ist, um ansprechend auf die nte Abrufaufforderung den bestimmten der Speicherblöcke aus dem Hauptspeicher (20) als einen abgerufenen Block abzurufen, wenn der bestimmte der Speicherblöcke in dem nten Cache-Speicher für die nte Abrufaufforderung fehlt, wobei die Blockabrufschaltung (7n) den abgerufenen Block als einen mten gespeicherten Block in einen mten Blockbereich (BA-m) speichert, wobei m zwischen 1 und M - beide eingeschlossen - variabel ist,
dadurch gekennzeichnet, daß die nte Cache-Speichereinheit (3n) aufweist:
eine Gemeinsamer-Block-Merker-Einrichtung (5n), die in erste bis Mte Kennzeichenbitbereiche (FA-1 bis FA-M) aufgeteilt ist, welche jeweils den ersten bis Mten Blockbereichen (BA-1 bis BA-M) entsprechen, wobei ein mter Kennzeichenbitbereich (FA-m) ein dem mten gespeicherten Block entsprechendes mtes Kennzeichenbit speichert, um entsprechend dem mten gespeicherten Block das Vorliegen oder Fehlen eines der Speicherblöcke in dem gemeinsamen Speicherbereich (CMA) anzuzeigen;
eine Cache-Freiräumeinrichtung (6n), die mit der Gemeinsamer-Block-Merker-Einrichtung (5n) und mit dem nten Cache-Speicher (4n) verbunden ist und auf die nte Cache-Freiräumaufforderung zum Freiräumen des nten Cache-Speichers (4n) anspricht, um den mten gespeicherten Block zu löschen, wenn das mte Kennzeichenbit das Vorliegen des genannten der Speicherblöcke in dem gemeinsamen Speicherbereich (CMA) anzeigt;
eine Gemeinsamer-Block-Abruferkennungseinrichtung (8n), die mit der Blockabrufschaltung (7n) verbunden ist, um zu erkennen, ob der bestimmte der Speicherblöcke in dem gemeinsamen Speicherbereich (CMA) vorliegt oder fehlt, wobei die Gemeinsamer-Block-Abruferkennungseinrichtung (8n) ein Erkennungssignal erzeugt, wenn der bestimmte der Speicherblöcke in dem gemeinsamen Speicherbereich (CMA) vorliegt; und
eine Gemeinsamer-Block-Merkersetzeinrichtung (9n), die mit der Gemeinsamer-Block-Abruferkennungseinrichtung (8n) und mit der Gemeinsamer-Block-Kennzeichenbit-Einrichtung (5n) verbunden ist, um das mte Kennzeichenbit zu setzen, welches ansprechend auf das Erkennungssignal das Vorliegen des bestimmten der Speicherblöcke in dem mten Kennzeichenbitbereich (FA-m) anzeigt.

## Revendications

1. Système à multiprocesseurs comportant des première à Nième unités de traitement d'instructions (11 à 1N), où N représente un premier entier naturel prédéterminé qui n'est pas inférieur à deux, une mémoire centrale (20) qui est divisée en une zone de mémoire commune (CMA), accessible auxdites première à Nième unités de traitement d'instructions (11 à 1N), en commun, ainsi qu'en première à Nième zones de mémoire exclusives (EMA-1 à EMA-N) accessibles exclusivement auxdites première à Nième unités de traitement d'instructions (11 à 1N), respectivement, et des première à Nième unités d'antémémoire (31 à 3N) connectées en commun à ladite mémoire centrale (20) et connectées auxdites première à Nième unités de traitement d'instructions (11 à 1N), respectivement, une nième unité d'antémémoire (3n) comportant une nième mémoire cache (4n), où n est une variable entre 1 et N inclus, ladite nième mémoire cache (4n) étant divisée en première à Mième zones de bloc (BA-1 à BA-M) pour mémoriser des blocs-mémoire pris en charge à partir de ladite mémoire centrale (20) en tant que premier à Mième blocs mémorisés, respectivement, où M représente un second entier naturel prédéterminé qui n'est pas inférieur à deux, une nième unité de traitement d'instructions (1n) envoyant à ladite nième unité d'antémémoire (3n) une demande d'effacement de la nième mémoire cache, indiquant l'effacement de ladite nième mémoire cache (4n), ladite nième unité de traitement d'instructions (1n) envoyant à ladite nième unité d'antémémoire (3n) une demande nième de prise en charge, indiquant la prise en charge d'un bloc-mémoire particulier parmi les blocs-mémoire, ladite nième unité d'antémémoire (3n) comprenant un circuit de prise en charge de bloc (7n), connecté à ladite mémoire centrale (20) et à ladite nième mémoire cache (4n), pour prendre en charge à partir de ladite mémoire centrale (20), en tant que bloc pris en charge, ledit bloc-mémoire particulier parmi les blocs-mémoire
en réponse à ladite demande nième de prise en charge lorsque ledit bloc-mémoire particulier parmi les blocs-mémoire est absent de ladite nième mémoire cache au moment de ladite demande nième de prise en charge, ledit circuit de prise en charge de bloc (7n) enregistrant ledit bloc pris en charge dans une mième zone de bloc (BA-m) en tant que mième bloc mémorisé, où m est une variable comprise entre 1 et M inclus,
caractérisé en ce que ladite nième unité d'antémémoire (3n) comporte:
des moyens (5n) de drapeau de bloc commun, divisés sous la forme de première à Mième zones de bit de drapeau (FA-1 à FA-M), correspondant auxdites première à Mième zones de bloc (BA-1 à BA-M), respectivement, une mième zone de bit de drapeau (FA-m) mémorisant un mième bit de drapeau correspondant audit mième bloc mémorisé, afin d'indiquer la présence ou l'absence d'un desdits blocs-mémoire, dans ladite zone de mémoire commune (CMA), en correspondance audit mième bloc mémorisé,
des moyens d'effacement de mémoire cache (6n) connectés auxdits moyens (5n) de drapeau de bloc commun et à ladite nième mémoire cache (4n) et réagissant à ladite demande d'effacement de la nième mémoire cache pour effacer ladite nième mémoire cache (4n), de manière à supprimer ledit mième bloc mémorisé lorsque ledit mième bit de drapeau indique la présence dudit bloc-mémoire des blocs-mémoire dans ladite zone de mémoire commune (CMA),
des moyens (8n) de détection de prise en charge de bloc commun, connectés audit circuit de prise en charge de bloc (7n), pour détecter si ledit bloc-mémoire particulier est présent ou absent dans ladite zone de mémoire commune (CMA), lesdits moyens (8n) de détection de prise en charge de bloc commun produisant un signal de détection lorsque ledit bloc-mémoire particulier est présent dans ladite zone de mémoire commune (CMA), et
des moyens (9n) de mise à l'état "1" du drapeau de bloc commun, connectés auxdits moyens (8n) de détection de prise en charge de bloc commun et auxdits moyens (5n) de drapeau de bloc commun, pour mettre à l'état "1", ledit mième binaire de drapeau, spécifiant la présence dudit bloc-mémoire particulier, dans ladite mième zone de binaire de drapeau (FA-m), en réponse audit signal de détection.
